# EUROPEAN PATENT SPECIFICATION

(11) **EP 4 636 239 B1**
(45) Date of publication and mention of the grant of the patent: **20.05.2026**
(21) Application number: 24170858.5
(22) Date of filing: 17.04.2024
(51) Int. Cl.: F02D 41/22, F02D 41/14, F01N 11/00, F02D 29/02, F02D 41/24

(54) **APPROACHES FOR DIAGNOSTICS OF NOX SENSOR(S)**
ANSÄTZE ZUR DIAGNOSE VON NOX-SENSOR(EN)
APPROCHES POUR LE DIAGNOSTIC DE CAPTEUR(S) DE NOX

(43) Date of publication of application: 22.10.2025
(73) Proprietor: VOLVO TRUCK CORPORATION, 405 08 Göteborg (SE)
(72) Inventor: WILHELMSSON, Martin, 423 39 TORSLANDA (SE); LAINE, Leo, 414 84 GÖTEBORG (SE); STJERNBERG, Oscar, 411 35 GÖTEBORG (SE); KVIST, Roland, 360 42 BRAÅS (SE)
(74) Representative: Ström & Gulliksson AB

(56) References cited:
- WO-A1-2013/152780
- US-A1- 2016 232 723
- US-A1- 2017 260 922
- US-A1- 2022 341 354

## Description

### TECHNICAL FIELD

The disclosure relates generally to vehicle control. In particular aspects, the disclosure relates to diagnostics of nitrogen oxide (NOx) sensor(s). The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles that comprise an internal combustion engine (ICE) configured to provide energy for propulsion and/or other purposes are commonly equipped with one or more nitrogen oxide (NOx) sensor(s) configured to perform measurements relating to exhausts of the ICE.

One purpose of the NOx sensor(s) is to ensure compliance with emission regulations. To this end - and others - it is desirable that measurements performed by the NOx sensor(s) are reliable and accurate.

Therefore, there is a need for approaches for diagnostics of NOx sensor(s).

US 2022/0341354 A1 describes a method for anomaly detection at an NOx sensor, and US 2017/0260922 A1 describes approaches for monitoring sensors in the exhaust system of an ICE.

### SUMMARY

According to a first aspect of the herein claimed invention, a computer system according to claim 1 is provided for diagnostics of NOx sensor(s) of a vehicle. The vehicle comprises one or more electric motor(s) for propulsion, an internal combustion engine (ICE) configured to provide energy for driving the electric motor(s), and one or more other energy source(s) for driving the electric motor(s). The computer system comprises processing circuitry configured to - while the electric motor(s) are not driven by the ICE - control the ICE to operate according to a predefined operational mode, wherein the predefined operational mode has a correspondingly predefined expected, non-zero, NOx sensor response, control the NOx sensor(s) to perform measurements associated with the predefined operational mode of the ICE, and acquire corresponding measurement results from the NOx sensor(s) for comparison to the predefined expected NOx sensor response. The first aspect of the disclosure may seek to enable improved diagnostics of NOx sensor(s) (e.g., in terms of accuracy, reliability, etc.). A technical benefit may include that NOx sensor(s) are more accurately calibrated and/or that malfunction of NOx sensor(s) is more reliably detected. Thereby, compliance with emission regulations may be more reliably ensured.

According to a second aspect of the herein claimed invention, a computer-implemented method according to claim 2 is provided for diagnostics of NOx sensor(s) of a vehicle. The vehicle comprises one or more electric motor(s) for propulsion, an internal combustion engine (ICE) configured to provide energy for driving the electric motor(s), and one or more other energy source(s) for driving the electric motor(s). The method comprises - while the electric motor(s) are not driven by the ICE - controlling (by processing circuitry of a computer system) the ICE to operate according to a predefined operational mode, wherein the predefined operational mode has a correspondingly predefined expected, non-zero, NOx sensor response (500), controlling (by the processing circuitry) the NOx sensor(s) to perform measurements associated with the predefined operational mode of the ICE, and acquiring (by the processing circuitry) corresponding measurement results from the NOx sensor(s) for comparison to the predefined expected NOx sensor response. The second aspect of the disclosure may seek to enable improved diagnostics of NOx sensor(s) (e.g., in terms of accuracy, reliability, etc.). A technical benefit may include that NOx sensor(s) are more accurately calibrated and/or that malfunction of NOx sensor(s) is more reliably detected. Thereby, compliance with emission regulations may be more reliably ensured. Alternatively or additionally, a technical benefit may include that elaborate NOx sensor diagnostics is enabled even during use of the vehicle (e.g., when the vehicle is executing a route and/or is in motion).

Optionally in some examples, including in at least one preferred example, the predefined operational mode may be defined by a steady-state engine operation point. A technical benefit may include that continuous measurements may be performed over a relatively long duration of time (e.g., as compared to measurements relating to a pulse-shaped sensor response), which may enable validation of measurement consistency, for example.

Optionally in some examples, including in at least one preferred example, the predefined expected NOx sensor response may be defined by one or more of: a peak amplitude, a duration, a pulse shape, and a total emission. A technical benefit may include that suitable parameters are provided for the comparison of measurement results to the predefined expected NOx sensor response.

Optionally in some examples, including in at least one preferred example, controlling the ICE to operate according to the predefined operational mode may comprise causing (by the processing circuitry) single ignition operation of the ICE. A technical benefit may include that a way to implement consistently repeatable measurement conditions is provided.

Optionally in some examples, including in at least one preferred example, controlling the ICE to operate according to the predefined operational mode may comprise causing (by the processing circuitry) a corresponding specific level of fuel injection. A technical benefit may include that an amplitude of the NOx sensor response can be varied by corresponding variation of the level of fuel injection.

Optionally in some examples, including in at least one preferred example, controlling the ICE to operate according to the predefined operational mode may comprise causing (by the processing circuitry) a corresponding torque to be applied to a crank shaft of the ICE. A technical benefit may include that a simulated load can be varied by corresponding variation of the applied torque. Alternatively or additionally, a technical benefit may include that the applied torque implements a steady-state engine operation point.

Optionally in some examples, including in at least one preferred example, causing the torque to be applied to the crank shaft of the ICE may comprise controlling (by the processing circuitry) an electric generator of the vehicle to operate in reverse to generate the torque. A technical benefit may include that way to implement the torque application is provided.

Optionally in some examples, including in at least one preferred example, controlling the ICE to operate according to the predefined operational mode may comprise causing (by the processing circuitry) the ICE to run at a corresponding engine speed. A technical benefit may include that the engine speed implements a steady-state engine operation point.

Optionally in some examples, including in at least one preferred example, the method may further comprise calibrating (by the processing circuitry) the NOx sensor(s) based on the comparison of the measurement results to the predefined expected NOx sensor response. A technical benefit may include improved (e.g., more accurate) measurements following the calibration.

Optionally in some examples, including in at least one preferred example, the method may further comprise issuing (by the processing circuitry) a NOx sensor malfunction alert responsive to calibration failure. A technical benefit may include that an operator, or service, function of the vehicle is made aware of that NOx sensor service and/or replacement is needed.

Optionally in some examples, including in at least one preferred example, the method may further comprise triggering (by the processing circuitry) the predefined operational mode to be applied - while the electric motor(s) are not driven by the ICE - responsive to one or more of a specific time interval having passed since previously performed measurements associated with the predefined operational mode of the ICE, and an indication of NOx sensor malfunction. A technical benefit may include that the NOx sensor diagnostics can be automatically performed with periodicity and/or when malfunction is suspected.

Optionally in some examples, including in at least one preferred example, the method may further comprise - before controlling the NOx sensor(s) to perform the measurements - causing (by the processing circuitry) the NOx sensor(s) to be brought to a specified temperature. A technical benefit may include that more relevant measurements are provided when the NOx sensor(s) require a minimum and/or specified temperature to perform measurements.

Optionally in some examples, including in at least one preferred example, causing the NOx sensor(s) to be brought to the specified temperature may comprise - before controlling the ICE to operate according to the predefined operational mode - controlling (by the processing circuitry) the ICE to pre-heat the NOx sensor(s). A technical benefit may include that separate heating elements are not required.

According to a third aspect of the disclosure, a vehicle is provided comprising NOx sensor(s), one or more electric motor(s) for propulsion, an internal combustion engine (ICE) configured to provide energy for driving the electric motor(s), one or more other energy source(s) for driving the electric motor(s), and the computer system of the first aspect. The third aspect of the disclosure may seek to provide a vehicle with improved diagnostics of NOx sensor(s) (e.g., in terms of accuracy, reliability, etc.). A technical benefit may include that NOx sensor(s) are more accurately calibrated and/or that malfunction of NOx sensor(s) is more reliably detected. Thereby, compliance with emission regulations may be more reliably ensured. Alternatively or additionally, a technical benefit may include that elaborate NOx sensor diagnostics is enabled even during use of the vehicle (e.g., when the vehicle is executing a route and/or is in motion).

According to a fourth aspect of the disclosure, a computer program product is provided. The computer program product comprises program code for performing, when executed by processing circuitry, the method of the second aspect.

According to a fifth aspect of the disclosure, a non-transitory computer-readable storage medium is provided. The non-transitory computer-readable storage medium comprises instructions, which when executed by processing circuitry, cause the processing circuitry to perform the method of the second aspect.

The fourth and/or fifth aspect of the disclosure may seek to convey program code for enabling improved diagnostics of NOx sensor(s) (e.g., in terms of accuracy, reliability, etc.). A technical benefit may include that new vehicles and/or legacy vehicles comprising NOx sensor(s), one or more electric motor(s) for propulsion, an internal combustion engine (ICE) configured to provide energy for driving the electric motor(s), one or more other energy source(s) for driving the electric motor(s) may be conveniently configured, by software installation/update, to control the ICE to operate according to a predefined operational mode, wherein the predefined operational mode has a correspondingly predefined expected, non-zero, NOx sensor response, control the NOx sensor(s) to perform measurements associated with the predefined operational mode of the ICE, and acquire corresponding measurement results from the NOx sensor(s) for comparison to the predefined expected NOx sensor response; all while the electric motor(s) are not driven by the ICE.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2** is a schematic drawing illustrating a vehicle according to some examples.
**FIG. 3** is a schematic drawing illustrating a vehicle sub-system according to some examples.
**FIG. 4** is a schematic block diagram illustrating an arrangement according to some examples.
**FIG. 5** is a schematic plot illustrating an NOx response according to some examples.
**FIG. 6** is a schematic diagram illustrating a computer system for implementing examples disclosed herein according to some examples.
**FIG. 7** is a schematic drawing illustrating a computer program product in the form of a non-transitory computer-readable storage medium according to some examples.
**FIG. 8** is a schematic block diagram of a control unit according to some examples.

### DETAILED DESCRIPTION

The detailed description set forth below provides information and examples of the disclosed technology with sufficient detail to enable those skilled in the art to practice the disclosure.

This disclosure relates generally to vehicles that comprise an internal combustion engine (ICE) configured to provide energy for propulsion and/or other purposes (e.g., climate control, etc.). Such vehicles are commonly equipped with one or more nitrogen oxide (NOx) sensor(s) configured to perform measurements relating to exhausts of the ICE.

Generally, the ICE could run on any suitable type of fuel that generated NOx exhaust gas (e.g., gasoline, diesel, hydrogen gas, natural gas, etc.).

Such measurements may be used for one or more of a variety of purposes. For example, the measurements may be used for evaluation of compliance with emission regulations, performance control, energy consumption control, etc. In some examples, the operation of the ICE may be dynamically adjusted based on the measurements (e.g., change one or more parameters - such as engine speed, gear, fuel injection, etc. - to reduce relatively high emissions and/or reduce energy consumption). For example, the ICE may be controlled to operate at an operational point that is optimal under the condition that emission regulations are fulfilled; possibly together with one or more other requirement(s) (e.g., durability, driveability, etc.).

It is generally desirable that measurements performed by the NOx sensor(s) are reliable and accurate. To this end, the NOx sensor(s) need to be properly calibrated.

It may be advantageous to be able to do (re-)calibration automatically and/or during use of the vehicle (e.g., since changed circumstances may cause a previous calibration to become outdated or obsolete). Furthermore, it may be advantageous to be able to do calibration in relation to various operational modes of the ICE (e.g., to improve measurement accuracy).

According to the approaches described herein, the vehicle comprises one or more electric motor(s) for propulsion, and the ICE is configured to provide energy for driving the electric motor(s). The vehicle also comprises one or more other energy source(s) for driving the electric motor(s). While the electric motor(s) are not driven by the ICE (e.g., while the electric motor(s) are driven by one of the other energy source(s), or while the electric motor(s) are braking), the ICE is correspondingly available for other purposes than driving the electric motor(s), and this is utilized by the approaches described herein.

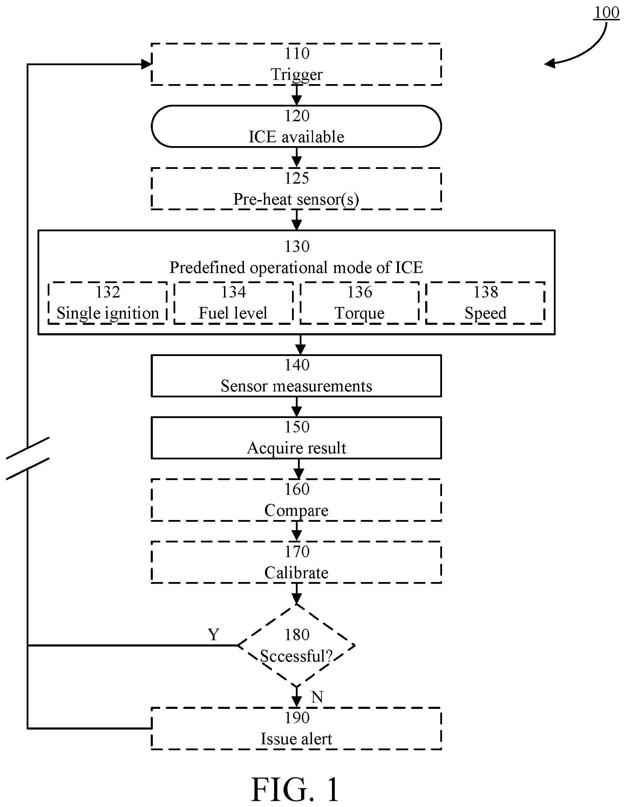

**FIG. 1** illustrates a method **100** according to some examples. The method **100** is suitable for diagnostics of NOx sensor(s) of a vehicle that comprises one or more electric motor(s) for propulsion, an ICE configured to provide energy for driving the electric motor(s), as well as one or more other energy source(s) for driving the electric motor(s). The diagnostics may, for example, be used for (re-)calibration of the NOx sensor(s) as elaborated on above. Alternatively or additionally, the diagnostics may be used to detect malfunctioning of the NOx sensor(s). To this end, any type of malfunctioning may be relevant where the NOx sensor measurements are not sufficiently similar to the expected NOx sensor response (i.e., reduced accuracy or reliability, as well as break down). For example, malfunctioning may be due to the NOx sensor(s) being affected by other substances than NOx gases.

The approach implemented by the method **100** utilizes the availability of the ICE when the electric motor(s) are not driven by the ICE. That is, when the ICE is not currently used for generating electric power to drive the electric motor(s), it can be left idle or it can be used for other purposes; e.g., to perform controlled measurements by the NOx sensor(s) as explored by the method **100.**

While the electric motor(s) are not driven by the ICE, and the ICE is correspondingly available (as illustrated by **120**), the method **100** comprises controlling the ICE to operate according to a predefined operational mode (as illustrated by step **130**), controlling the NOx sensor(s) to perform measurements associated with the predefined operational mode of the ICE (as illustrated by step **140**), and acquiring corresponding measurement results from the NOx sensor(s) (as illustrated by step **150**). Thereby, automatic (re-)calibration during use of the vehicle is enabled.

The predefined operational mode of the ICE has a correspondingly predefined expected, non-zero, NOx sensor response (an expected gas concentration as a function of time). The predefined expected NOx sensor response may be acquired in any suitable way (e.g., via previously performed bench tests, controlled vehicle tests, ICE product specifications, NOx sensor product specifications, etc.).

Generally, there may be used two or more different predefined operational modes, each with a respective predefined expected NOx sensor response. In the latter case, at least one of the predefined expected NOx sensor responses is a non-zero response, while one or more of the predefined expected NOx sensor responses may be a zero response. The operation of the ICE in the predefined operational mode(s) enables refined calibration compared to calibration only in relation to zero NOx levels.

The predefined expected NOx sensor response may have any possible shape (e.g., a pulse or a continuum). For example, the predefined operational mode of the ICE may comprise a single impulse operation of the ICE, in which case a pulse-shaped response may be expected. Alternatively or additionally, the predefined operational mode of the ICE may be defined by a steady-state engine operation point, in which case a continuously shaped response may be expected.

The measurement results acquired from the NOx sensor(s) in step **150** may be used for any suitable purpose. For example, they are suitable for comparison to the predefined expected NOx sensor response.

To this end, the method **100** may comprise comparing the measurement results acquired from the NOx sensor(s) to the predefined expected NOx sensor response (as illustrated by optional step **160**). The comparison may involve comparing any one or more feature(s) of the predefined expected NOx sensor response with corresponding one or more feature(s) of the measurement results acquired from the NOx sensor(s).

Example features (parameters) of the predefined expected NOx sensor response that may be used in the comparison include peak amplitude (of pulse or continuum), duration (of pulse), shape (of pulse or continuum), total emission (of pulse or during a specified time of the continuum), average emission (of continuum), etc.

The method **100** may further comprise calibrating the NOx sensor(s) based on the comparison of the measurement results to the predefined expected NOx sensor response (as illustrated by optional step **170**). For example, if one of the compared features differs between the measurement results acquired from the NOx sensor(s) and the predefined expected NOx sensor response, the NOx sensor(s) may be calibrated to mitigate (e.g., eliminate) the difference. If none of the compared features differs between the measurement results acquired from the NOx sensor(s) and the predefined expected NOx sensor response, calibration may be omitted.

In some examples, the method **100** comprises determining whether or not the calibration in step **170** was successful (as illustrated by optional step **180**). When the calibration was successful (Y-path out of step **180**), the method **100** may be considered completed and/or may be restarted for a new iteration of NOx sensor diagnostics. When the calibration was not successful (N-path out of step **180**), the method **100** may continue to optional step **190,** where a NOx sensor malfunction alert is issued responsive to the calibration failure. Unsuccessful calibration may be indicated in any suitable way. An indication of unsuccessful calibration might include that already collected and/or subsequent measurements by the allegedly calibrated sensor(s) are deemed to be erroneous and/or unreliable. For example, calibration may be deemed unsuccessful when measurements are substantially different from expected - or even physically possible - values (e.g., using some suitable metric for the difference and comparison to a threshold value).

The sensor malfunction alert may be intended to inform an operator of the vehicle (e.g., a driver) and/or a service function of the vehicle (e.g., fleet management, or service, function) that NOx sensor service and/or replacement is needed.

For example, the sensor malfunction alert may be rendered via a user interface of the vehicle (e.g., an information screen, a malfunction light, or similar). Alternatively or additionally, the sensor malfunction alert may be uploaded to a centralized (e.g., cloud-based) service function.

Generally, the predefined operational mode may be any suitable operational mode which has a correspondingly predefined expected NOx sensor response, and a few examples will be given herein.

One example predefined operational mode is achieved by operating the ICE in revers to pump air through the ICE cylinders and the after-treatment system. This predefined operational mode typically corresponds to a predefined expected NOx sensor response which is a zero response.

One example predefined operational mode is achieved by operating the ICE by single ignition (as illustrated by optional sub-step **132**). This may be seen as a way to implement single impulse operation of the ICE.

One example predefined operational mode is achieved by using a corresponding specific level of fuel injection (as illustrated by optional sub-step **134**). This may be seen as a way to implement amplitude control of the NOx sensor response, and may be used for single impulse operation, as well as for steady-state engine operation.

One example predefined operational mode is achieved by applying a corresponding torque to the crank shaft of the ICE (as illustrated by optional sub-step **136**). This may be seen as a way to simulate a corresponding load, and may be used for single impulse operation, as well as for steady-state engine operation. Typically, a relatively high torque results in a relatively high fuel injection, which typically causes relatively high cylinder temperature and - consequently - a relatively high level of NOx gases. Thus, this may be seen as a way to implement amplitude control of the NOx sensor response and/or control of the total emission for the NOx sensor response.

The torque may be applied in any suitable way, e.g., by controlling an electric generator of the vehicle to operate in reverse to generate the torque. For example, an electric generator that is primarily purposed to be driven by the ICE to generate electric power for the one or more electric motor(s) for propulsion may be used. The reverse operation of the electric generator may be powered by an energy storing system (ESS; e.g., a battery system), by excess power generated by the electric motor(s) during braking, or by other suitable means.

One example predefined operational mode is achieved by causing the ICE to run at a corresponding engine speed (as illustrated by optional sub-step 138). This may be seen as a way to implement steady-state engine operation. Typically, a relatively high engine speed results in a relatively high exhaust flow, which typically causes the NOx gases to reach the NOx sensor(s) relatively quickly. Thus, this may be seen as a way to implement control of the starting point of the NOx sensor response. Potentially, the concentration of NOx in the exhaust flow could be decreased with increased engine speed, since it might be diluted by other gases if the mass flow is relatively high.

Any suitable combinations of the above and/or other examples may also be used to implement the predefined operational mode (e.g., single ignition with a specific level of fuel injection, etc.).

As already mentioned, it may be advantageous to be able to do (re-)calibration repeatedly since changed circumstances may cause a previous calibration to become outdated or obsolete. To this end, the method **100** may comprise triggering performance of the previously described procedure (as illustrated by optional step **110**).

For example, the triggering may be responsive to an event (e.g., an indication of NOx sensor malfunction). The indication of NOx sensor malfunction may be any suitable indication. Examples include: relatively low NOx readings while the ICE has relatively high temperature and/or uses a relatively high moment and/or has relatively high load, relatively high NOx readings while the ICE has relatively low temperature and/or uses a relatively low moment and/or has relatively low load, relatively long delay of NOx readings (slow response by NOx sensor(s)), etc.

Alternatively or additionally, the triggering may be responsive to a specific time interval having passed since previous measurements associated with a (the same or different) predefined operational mode of the ICE were performed (e.g., periodical triggering).

The procedure triggered in step **110** is initiated when the ICE is available. For example, the method **100** may comprise waiting until the ICE becomes available, or causing the ICE to become available by switching drive of the electric motor(s) to one of the other energy source(s). In either case, the triggered procedure may be initiated as soon as the ICE becomes available, or later.

Oftentimes, NOx sensor(s) should have a specified (minimum) temperature to be able to provide relevant measurements. To this end, the method **100** may comprise - before controlling the NOx sensor(s) to perform the measurements (step **140**) - causing the NOx sensor(s) to be brought to a specified temperature (as illustrated by optional step **125**). If the NOx sensor(s) are inactive, step **125** may also comprise activating them.

The NOx sensor(s) may be brought to the specified temperature by any suitable means. For example, heating elements may be used. Alternatively or additionally, the NOx sensor(s) may be brought to the specified temperature by - before controlling the ICE to operate according to the predefined operational mode (step **130**) - controlling the ICE to pre-heat the NOx sensor(s). Controlling the ICE to pre-heat the NOx sensor(s) may comprise operating the ICE to run in any suitable way that causes the NOx sensors to be heated up (e.g., due to heated exhaust gases being pushed through/passed the NOx sensors). Typically, suitable ICE operations for NOx sensor pre-heating also needs to fulfill other requirements (e.g., emission regulations).

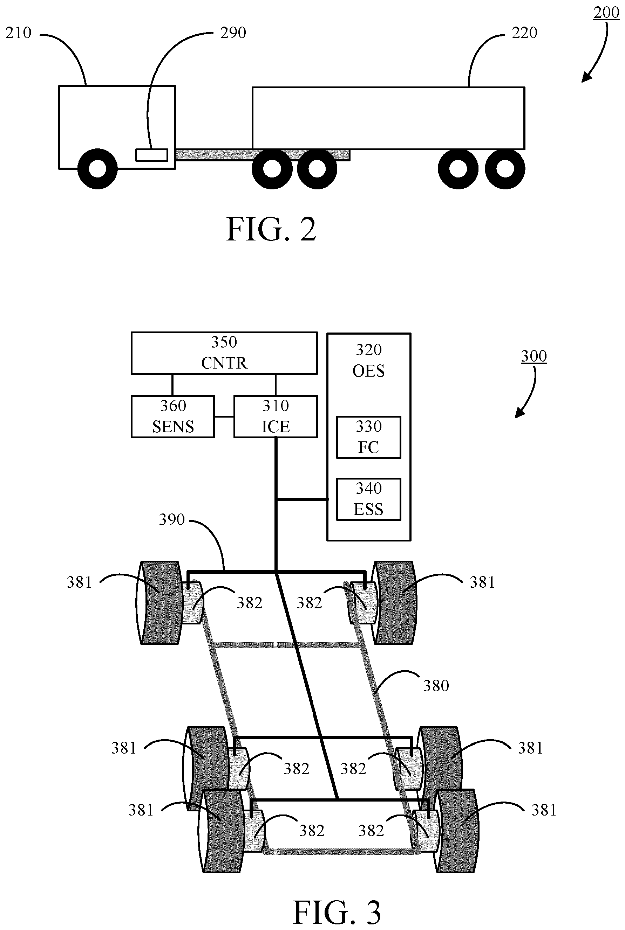

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner.

The vehicle **200** comprises NOx sensor(s), one or more electric motor(s) for propulsion, an internal combustion engine (ICE) configured to provide energy for driving the electric motor(s), and one or more other energy source(s) for driving the electric motor(s). Furthermore, the vehicle **200** comprises a computer system configured to perform, or cause performance of, one or more steps of the method **100** of **FIG. 1****.**

For example, the tractor unit **210** and/or the trailer unit(s) **220** may comprise a vehicle control unit (VCU) **290** configured to perform various vehicle control functions, such as vehicle motion management (VMM), power/energy management, etc. Any of one or more VCU(s) **290** may be configured to perform, or cause performance of, one or more steps of the method **100** of **FIG. 1****.** Thus, the techniques disclosed herein may be performed by any of one or more VCU(s) **290** of the vehicle **200.**

**FIG. 3** schematically illustrates a vehicle sub-system **300** according to some examples. For example, the vehicle sub-system **300** may be suitable in relation to performance of one or more steps of the method **100** of **FIG. 1****.** Alternatively or additionally, the vehicle sub-system **300** may be comprised in a vehicle (e.g., the vehicle **200** of **FIG. 2**).

The vehicle-subsystem **300** is particularly suitable for a vehicle platform, which is also schematically illustrated in **FIG. 3****.**

According to the vehicle platform, wheels **381** are mounted in relation to a frame structure **390**, and one or a plurality of electric motors **382** are provided for driving the wheels (i.e., for propulsion). For example, each electric motor **382** may be mounted in direct association with a respective wheel **381** (e.g., electric motor mounted on the respective wheel), thereby enabling individual wheel drive. However, other mounting approaches for the electric motors are possible (e.g., an electric motor being mounted in association with a corresponding wheel axle and configured to drive the wheels of that axle, an electric motor being mounted to enable it to drive two or more wheels of one side of the vehicle, etc.).

In the context of the vehicle platform, there is provided one or more power unit(s) configured to drive the electric motor(s) **382.** In some examples, the vehicle platform may provide a power unit interface configured to receive a power unit, whereby different types of power units can be utilized for the same vehicle platform.

Various types of power units include (but are not limited to): a fuel cell arrangement (FC) **330,** an internal combustion engine (ICE) **310,** and an energy storing system (ESS) **340** (e.g., a battery system). The power unit(s) excluding the ICE are referred to herein as other energy source(s) (OES) **320.**

Any one or more of the power unit(s) may drive the electric motor(s) **382** by directly (or via an electric generator in the case of the ICE) supplying electric power/energy to the electric motor(s) and/or by supplying electric power/energy to the ESS **340,** which in turn supplies electric power/energy to the electric motor(s). Thus, there is provided an ICE **310** configured to provide energy for driving the electric motor(s) **382,** as well as one or more other energy source(s) **320** for driving the electric motor(s) **382.**

A transfer network **390** is configured to transfer electric energy between the power units **310, 320** and the electric motor(s) **382;** from the power units to the electric motor(s) during propulsion and (possibly) from the electric motor(s) to the power units during braking by the electric motor(s). The transfer network **390** may be implemented in any suitable way (e.g., using electric wiring).

The vehicle sub-system **300** comprises a controller (CNTR; e.g., controlling circuitry or a control module) **350** configured to perform, or cause performance of, one or more steps of the method **100** of **FIG. 1****.** For example, the controller **350** may be implemented by the VCU **290** of **FIG. 2****.** Thus, the controller **350** is configured to - while the electric motor(s) **382** are not driven by the ICE **310** - control the ICE **310** to operate according to a predefined operational mode, control one or more NOx sensor(s) (SENS) **360** to perform associated measurements on the ICE exhaust gases, and acquiring corresponding measurement results from the NOx sensor(s) **360.**

In some examples, the vehicle sub-system **300** further comprises one or more of: the electric motor(s) **382,** the transfer network **390,** the ICE **310,** the NOx sensor(s) **360,** and the other energy source(s) **320.**

It should be noted that the vehicle platform context (where an ICE **310** and one or more other energy source(s) **320** are configured to provide electrical power for propulsion via electric motor(s) **382**) greatly extends the availability of the ICE for NOx sensor measurements compared to vehicle platforms where the ICE is configured to directly provide mechanical power for the wheel drive. For example, the ICE may be used for NOx calibration measurements for a relatively long duration of time (until the other energy source(s) are emptied). Furthermore, there is relatively large possibilities to vary parameters like engine speed (moment) and torque, while such parameters would be limited by the wheel state for other types of vehicle platforms. Thus, more flexible (re-)calibration is enabled for the vehicle platform context considered here.

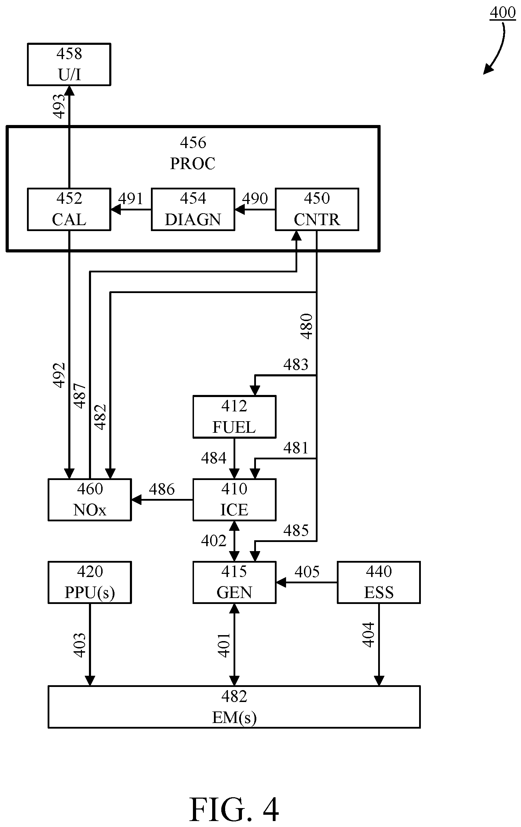

**FIG. 4** schematically illustrates an arrangement **400** according to some examples. For example, the arrangement **400** may be suitable in relation to performance of one or more steps of the method **100** of **FIG. 1****.** Alternatively or additionally, the arrangement **400** may be comprised in a vehicle (e.g., the vehicle **200** of **FIG. 2**). Yet alternatively or additionally, the arrangement **400** may overlap (partially or fully) with the vehicle sub-system **300** of **FIG. 3****.**

The arrangement **400** comprises a controller (CNTR; e.g., controlling circuitry or a control module) **450,** one or more electric motor(s) (EM(s)) **482,** and an internal combustion engine (ICE) **410** associated with an electric generator (GEN) **415** and with one or more NOx sensor(s) **460.** The arrangement **400** also comprises one or more energy source(s) other than the ICE; exemplified by an energy storing system (ESS) **440** and one or more other primary power unit(s) (PPU(s)) **420.**

Any one or more of the ICE **410,** the ESS **440,** and the PPU(s) **420** may drive electric motor(s) **482** (via the electric generator **415** in the case of the ICE), as illustrated by **401, 402, 403, 404.** Thus, there is provided an ICE **410** configured to provide energy for driving the electric motor(s) **482,** as well as one or more other energy source(s) **420, 440** for driving the electric motor(s) **482.**

In various examples, the arrangement **400** may also comprise one or more of a fuel controller (FUEL) **412,** a user interface (U/I) **458,** a diagnoser (DIAGN; e.g., diagnosing circuitry or a diagnose module) **454,** and a calibrator (CAL; e.g., calibration circuitry or a calibration module) **452.**

One or more of the controller **450,** the diagnoser **454,** and the calibrator **452** may be comprised (e.g., implemented by) a processor (PROC; e.g., processing circuitry or a processor module) **456.** For example, the controller **450** and/or the processor **456** may be implemented by the VCU **290** of **FIG. 2****.**

The controller **450** is configured to perform, or cause performance of, one or more steps of the method 100 of **FIG. 1****.** Thus, the controller **450** is configured to - while the electric motor(s) **482** are not driven by the ICE **410** - control the ICE **410** to operate according to a predefined operational mode (illustrated by **480**), control the NOx sensor(s) **460** to perform associated measurements on the ICE exhaust gases **486** (illustrated by **482**), and acquiring corresponding measurement results from the NOx sensor(s) **460** (illustrated by **487**).

To control the ICE **410** to operate according to a predefined operational mode, the controller **450** may be configured to - for example - operate the ICE by single ignition (illustrated by **481**), and/or use a corresponding specific level of fuel injection (illustrated by **483** and **484**), and/or apply a corresponding torque to the crank shaft of the ICE using the electric generator **415** (illustrated by **485, 401, 405** and **402**), and/or run the ICE at a corresponding engine speed (illustrated by **481**).

Information pertaining to the measurement results **487** may be provided to the diagnoser **454** (as illustrated by **490**), and the diagnoser **454** may be configured to compare the measurement results to the predefined expected NOx sensor response. If advisable based on the comparison (e.g., if one of the compared features differs between the measurement results and the predefined expected NOx sensor response), the diagnoser **454** may trigger the calibrator **452** (illustrated by **491**) to calibrate the NOx sensor(s) **460** accordingly (illustrated by **492**). In case the calibration is not successful, the calibrator **452** may issue a NOx sensor malfunction alert (illustrated by **493**), for example via the user interface **458.**

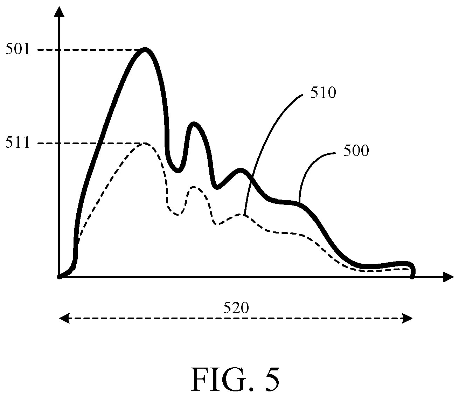

**FIG. 5** schematically illustrates an example (pulse-shaped) predefined expected, non-zero, NOx sensor response **500** and corresponding NOx measurements 510.

In this example, the duration **520** coincide for the measured and expected responses, while the peak amplitudes **510, 511** are different.

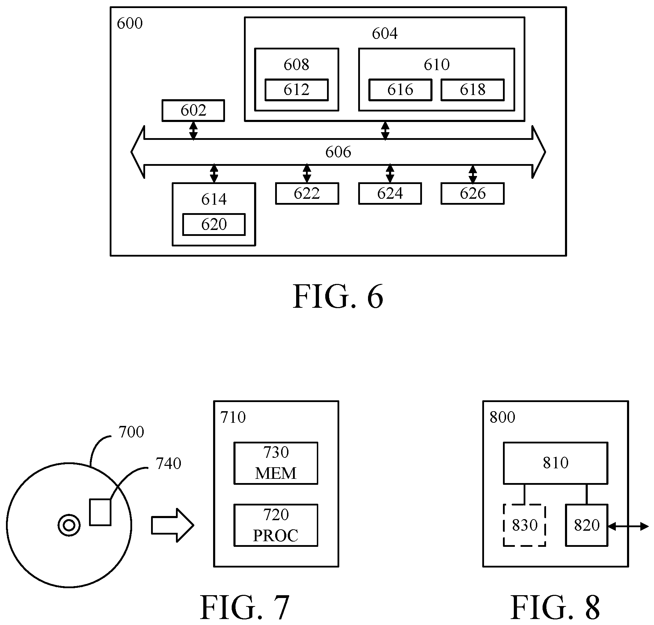

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

According to some examples, the computer system **600** may be suitable for enabling diagnostics of NOx sensor(s) of a vehicle as described herein.

For example, the computer system **600** may be configured to perform, or cause performance of, one or more steps of the method **100** of **FIG. 1****.** Alternatively or additionally, the computer system **600** may be comprised in, or comprise, one or more VCU(s) (e.g., the VCU **290 of** **FIG. 2**). Yet alternatively or additionally, the computer system **600** may be comprised in a vehicle (e.g., the vehicle **200 of** **FIG. 2**). Yet alternatively or additionally, the computer system **600** may implement one or more of the controller **350** of **FIG. 3****,** the controller **450** of **FIG. 4****,** and the processor **456** of **FIG. 4****.**

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 7** illustrates a computer program product **700** exemplified as a non-transitory computer-readable medium in the form of a compact disc (CD) ROM. The computer-readable medium has stored thereon program code **740** comprising instructions. The program code is loadable into processing circuitry (PROC; e.g., a data processing unit) **720,** which may, for example, be comprised in a control unit **710.** When loaded into the processing circuitry, the program code may be stored in a memory (MEM) **730** associated with, or comprised in, the processing circuitry. According to some examples, the program code may, when loaded into, and run by, the processing circuitry, cause execution of method steps according to, for example, any of the methods described herein.

**FIG. 8** schematically illustrates, in terms of a number of functional units, the components of a control unit **800** according to some examples. This control unit **800** may be comprised in the vehicle **200;** e.g., in the form of a VCU **290** (compare with **FIG. 2**). Processing circuitry **810** is provided using any combination of one or more of a suitable central processing unit CPU, multiprocessor, microcontroller, digital signal processor DSP, etc., capable of executing software instructions stored in a computer program product, e.g. in the form of a storage medium **830.** The processing circuitry **810** may further be provided as at least one application specific integrated circuit ASIC, or field programmable gate array FPGA.

Particularly, the processing circuitry **810** is configured to cause the control unit **800** to perform a set of operations, or steps, such as the method discussed in connection to **FIG. 1****.**

For example, the storage medium **830** may store the set of operations, and the processing circuitry **810** may be configured to retrieve the set of operations from the storage medium **830** to cause the control unit **800** to perform the set of operations. The set of operations may be provided as a set of executable instructions. Thus, the processing circuitry **810** is thereby arranged to execute methods as herein disclosed. In particular, there is disclosed a control unit **800** for controlling an articulated vehicle **200** comprising a tractor **210** and/or one or more towed vehicle units **220,** the control unit comprising processing circuitry **810,** an interface **820** coupled to the processing circuitry **810,** and a memory **830** coupled to the processing circuitry **810,** wherein the memory comprises machine readable computer program instructions that, when executed by the processing circuitry, causes the control unit to perform the methods discussed herein.

The storage medium **830** may also comprise persistent storage, which, for example, can be any single one or combination of magnetic memory, optical memory, solid state memory or even remotely mounted memory.

The control unit **800** may further comprise an interface **820** for communications with at least one external device. As such, the interface **820** may comprise one or more transmitters and receivers, comprising analogue and digital components and a suitable number of ports for wireline or wireless communication.

The processing circuitry **810** controls the general operation of the control unit **800,** e.g., by sending data and control signals to the interface **820** and the storage medium **830,** by receiving data and reports from the interface **820,** and by retrieving data and instructions from the storage medium **830.** Other components, as well as the related functionality, of the control node are omitted in order not to obscure the concepts presented herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the herein claimed invention being set forth in the following claims.

## Claims

1. A computer system (290, 350, 456, 600, 720, 810) configured to perform diagnostics of NOx sensor(s) (360, 460) of a vehicle (200), wherein the vehicle comprises one or more electric motor(s) (382, 482) configured to provide propulsion, an internal combustion engine (310, 410) - ICE - configured to provide energy via an electric generator to directly drive the electric motor(s), and one or more other energy source(s) (320, 420, 440) configured to provide energy to drive the electric motor(s), the computer system comprising processing circuitry configured to, while the vehicle is in motion and the electric motor(s) are used for propulsion while not driven by the ICE:
control the ICE to operate according to a predefined operational mode, wherein the predefined operational mode has a correspondingly predefined expected, non-zero, NOx sensor response (500);
control the NOx sensor(s) to perform measurements associated with the predefined operational mode of the ICE; and
acquire corresponding measurement results from the NOx sensor(s) for comparison to the predefined expected NOx sensor response.

2. A computer-implemented method (100) performing diagnostics of NOx sensor(s) (360, 460) of a vehicle (200), wherein the vehicle comprises one or more electric motor(s) (382, 482) configured to provide propulsion, an internal combustion engine (310, 410) - ICE - configured to provide energy via an electric generator to directly drive the electric motor(s), and one or more other energy source(s) (320, 420, 440) configured to provide energy to drive the electric motor(s), the method comprising, while vehicle is in motion and the electric motor(s) are used for propulsion while not driven by the ICE (120):
controlling (130), by processing circuitry of a computer system (290, 350, 456, 600, 720, 810), the ICE to operate according to a predefined operational mode, wherein the predefined operational mode has a correspondingly predefined expected, non-zero, NOx sensor response (500);
controlling (140), by the processing circuitry, the NOx sensor(s) to perform measurements associated with the predefined operational mode of the ICE; and
acquiring (150), by the processing circuitry, corresponding measurement results from the NOx sensor(s) for comparison (160) to the predefined expected NOx sensor response.

3. The method of claim 2, wherein the predefined operational mode is defined by a steady-state engine operation point and/or wherein the predefined expected NOx sensor response is defined by one or more of: a peak amplitude (501), a duration (520), a pulse shape, and a total emission.

4. The method of any of claims 2-3, wherein controlling the ICE to operate according to the predefined operational mode comprises causing (132), by the processing circuitry, single ignition operation of the ICE.

5. The method of any of claims 2-4, wherein controlling the ICE to operate according to the predefined operational mode comprises causing (134), by the processing circuitry, a corresponding specific level of fuel injection.

6. The method of any of claims 2-5, wherein controlling the ICE to operate according to the predefined operational mode comprises causing (136), by the processing circuitry, a corresponding torque to be applied to a crank shaft of the ICE.

7. The method of claim 6, wherein causing the torque to be applied to the crank shaft of the ICE comprises controlling, by the processing circuitry, the electric generator of the vehicle to operate in reverse to generate the torque.

8. The method of any of claims 2-7, wherein controlling the ICE to operate according to the predefined operational mode comprises causing (138), by the processing circuitry, the ICE to run at a corresponding engine speed.

9. The method of any of claims 2-8, further comprising calibrating (170), by the processing circuitry, the NOx sensor(s) based on the comparison of the measurement results to the predefined expected NOx sensor response.

10. The method of claim 9, further comprising issuing (190), by the processing circuitry, a NOx sensor malfunction alert responsive to calibration failure.

11. The method of any of claims 2-10, further comprising triggering (110), by the processing circuitry, the predefined operational mode to be applied - while the electric motor(s) are not driven by the ICE - responsive to one or more of:
a specific time interval having passed since previously performed measurements associated with the predefined operational mode of the ICE; and
an indication of NOx sensor malfunction.

12. The method of any of claims 2-11, further comprising - before controlling the NOx sensor(s) to perform the measurements - causing (125), by the processing circuitry, the NOx sensor(s) to be brought to a specified temperature.

13. The method of claim 12, wherein causing the NOx sensor(s) to be brought to the specified temperature comprises - before controlling the ICE to operate according to the predefined operational mode - controlling, by the processing circuitry, the ICE to pre-heat the NOx sensor(s).

14. A vehicle (200) comprising NOx sensor(s) (360, 460), one or more electric motor(s) (382, 482) for propulsion, an internal combustion engine (310, 410) - ICE - configured to provide energy for driving the electric motor(s), one or more other energy source(s) (320, 420, 440) for driving the electric motor(s), and the computer system (290, 350, 456, 600, 720, 810) of claim 1.

15. A computer program product (700) comprising program code for performing, when executed by the processing circuitry, the method of any of claims 2-13.

16. A non-transitory computer-readable storage medium (700) comprising instructions, which when executed by the processing circuitry, cause the processing circuitry to perform the method of any of claims 2-13.

## Patentansprüche

1. Computersystem (290, 350, 456, 600, 720, 810), das konfiguriert ist, um eine Diagnose von NOx-Sensor(en) (360, 460) eines Fahrzeugs (200) durchzuführen, wobei das Fahrzeug einen oder mehrere Elektromotoren (382, 482) umfasst, die konfiguriert sind, um einen Antrieb bereitzustellen, einen Verbrennungsmotor (310, 410) - ICE, der konfiguriert ist, um über einen elektrischen Generator Energie bereitzustellen, um den/die Elektromotor(en) direkt anzutreiben, und eine oder mehrere andere Energiequelle(n) (320, 420, 440), die konfiguriert ist/sind, um Energie bereitzustellen, um den/die Elektromotor(en) anzutreiben, das Computersystem umfassend eine Verarbeitungsschaltung, die konfiguriert ist, um, während das Fahrzeug in Bewegung ist und der/die Elektromotor(en) für den Antrieb verwendet wird/werden, während es nicht von dem ICE angetrieben wird:
den ICE zu steuern, um gemäß einem vordefinierten Betriebsmodus betrieben zu werden, wobei der vordefinierte Betriebsmodus ein entsprechend vordefiniertes erwartetes NOx-Sensorverhalten (500) ungleich Null aufweist;
den/die NOx-Sensor(en) zu steuern, um Messungen durchzuführen, die mit dem vordefinierten Betriebsmodus des ICE assoziiert sind; und
die entsprechenden Messresultate von dem/den NOx-Sensor(en) zum Vergleich mit dem vordefinierten erwarteten NOx-Sensorverhalten zu erfassen.

2. Computerimplementiertes Verfahren (100) zur Diagnose von NOx-Sensor(en) (360, 460) eines Fahrzeugs (200), wobei das Fahrzeug einen oder mehrere Elektromotor(en) (382, 482) umfasst, die konfiguriert sind, um Antrieb bereitzustellen, einen Verbrennungsmotor (310, 410) - ICE, der konfiguriert ist, um über einen elektrischen Generator Energie bereitzustellen, um die Elektromotoren direkt anzutreiben, sowie eine oder mehrere weitere Energiequelle(n) (320, 420, 440), die konfiguriert sind, um Energie zum Antrieb der Elektromotoren bereitzustellen, das Verfahren umfassend, während das Fahrzeug in Bewegung ist und die Elektromotoren für den Antrieb verwendet werden, während sie nicht von dem ICE (120) angetrieben werden:
Steuern (130), durch Verarbeitungsschaltung eines Computersystems (290, 350, 456, 600, 720, 810), des ICE, um den ICE gemäß einem vordefinierten Betriebsmodus zu betreiben, wobei der vordefinierte Betriebsmodus ein entsprechend vordefiniertes erwartetes NOx-Sensorverhalten (500) ungleich Null aufweist;
Steuern (140), durch die Verarbeitungsschaltung, des/der NOx-Sensor(en) (140), um Messungen durchzuführen, die mit dem vordefinierten Betriebsmodus des ICE assoziiert sind; und
Erfassen (150), durch die Verarbeitungsschaltung, entsprechender Messresultate von dem/den NOx-Sensoren zum Vergleich (160) mit dem vordefinierten erwarteten NOx-Sensorverhalten.

3. Verfahren nach Anspruch 2, wobei der vordefinierte Betriebsmodus durch einen stationären Motorbetriebspunkt definiert ist und/oder wobei das erwartete vordefinierte NOx-Sensorverhalten durch eines oder mehrere von Folgenden definiert ist: einer Spitzenamplitude (501), einer Dauer (520), einer Impulsform und einer Gesamtemission.

4. Verfahren nach einem der Ansprüche 2-3, wobei ein Steuern des ICE, um gemäß dem vordefinierten Betriebsmodus betrieben zu werden, ein Veranlassen (132), durch die Verarbeitungsschaltung, eines Einzelzündungsbetriebs des ICE umfasst.

5. Verfahren nach einem der Ansprüche 2-4, wobei ein Steuern des ICE, um gemäß dem vordefinierten Betriebsmodus betrieben zu werden, ein Veranlassen (134), durch die Verarbeitungsschaltung, eines entsprechenden spezifischen Kraftstoffeinspritzniveau umfasst.

6. Verfahren nach einem der Ansprüche 2-5, wobei ein Steuern des ICE, um gemäß dem vordefinierten Betriebsmodus betrieben zu werden, ein Veranlassen (136), durch die Verarbeitungsschaltung, ein Anwenden eines entsprechenden Drehmoments an einer Kurbelwelle des ICE umfasst.

7. Verfahren nach Anspruch 6, wobei ein Veranlassen, dass das Drehmoment auf die Kurbelwelle des ICE angewendet wird, ein Steuern, durch die Verarbeitungsschaltung, des elektrischen Generators des Fahrzeugs umfasst, um umgekehrt betrieben zu werden, um das Drehmoment zu erzeugen.

8. Verfahren nach einem der Ansprüche 2-7, wobei ein Steuern des ICE, um gemäß dem vordefinierten Betriebsmodus betrieben zu werden, ein Veranlassen (138), durch die Verarbeitungsschaltung, umfasst, dass der ICE mit einer entsprechenden Motordrehzahl läuft.

9. Verfahren nach einem der Ansprüche 2-8, ferner umfassend ein Kalibrieren (170), durch die Verarbeitungsschaltung, des/der NOx-Sensor(en) basierend auf dem Vergleichs der Messresultate mit dem vordefinierten erwarteten NOx-Sensorverhalten.

10. Verfahren nach Anspruch 9, ferner umfassend ein Ausgeben (190), durch die Verarbeitungsschaltung, eines NOx-Sensor-Störungsalarms als Reaktion auf einen Kalibrierungsfehler.

11. Verfahren nach einem der Ansprüche 2-10, ferner umfassend ein Auslösen (110), durch die Verarbeitungsschaltung, des vordefinierten Betriebsmodus, um, während der/die Elektromotor(en) nicht von dem ICE angetrieben werden, als Reaktion auf eines oder mehrere von Folgenden angewandt zu werden:
ein bestimmtes Zeitintervall, das seit zuvor durchgeführten Messungen in Verbindung mit dem vordefinierten Betriebsmodus des ICE vergangen ist; und
ein Hinweis auf eine NOx-Sensor-Störung.

12. Verfahren nach einem der Ansprüche 2-11, ferner umfassend, vor Steuern des/der NOx-Sensors/en zum Durchführen der Messungen, ein Veranlassen (125), durch die Verarbeitungsschaltung, dass der/die NOx-Sensor(en) auf eine bestimmte Temperatur gebracht wird/werden.

13. Verfahren nach Anspruch 12, wobei ein Veranlassen, dass der/die NOx-Sensor(en) auf die spezifizierte Temperatur gebracht wird/werden, vor Steuern des ICE, um gemäß dem vordefinierten Betriebsmodus betrieben zu werden, ein Steuern, durch die Verarbeitungsschaltung, des ICE umfasst, um den/die NOx-Sensor(en) vorzuheizen.

14. Fahrzeug (200), umfassend NOx-Sensor(en) (360, 460), einen oder mehrere Elektromotor(en) (382, 482) zum Antrieb, einen Verbrennungsmotor (310, 410) -ICE, der konfiguriert ist, um Energie zum Antreiben der Elektromotor(en) bereitzustellen, eine oder mehrere andere Energiequelle(n) (320, 420, 440) zum Antreiben des/der Elektromotor(en) und das Computersystem (290, 350, 456, 600, 720, 810) nach Anspruch 1.

15. Computerprogrammprodukt (700), umfassend Programmcode, der bei Ausführung durch die Verarbeitungsschaltung das Verfahren nach einem der Ansprüche 2-13 durchführt.

16. Nicht-transitorisches, computerlesbares Speichermedium (700), umfassend Anweisungen, die, wenn sie von der Verarbeitungsschaltung ausgeführt werden, die Verarbeitungsschaltung veranlassen, das Verfahren nach einem der Ansprüche 2-13 durchzuführen.

## Revendications

1. Système informatique (290, 350, 456, 600, 720, 810) configuré pour effectuer des diagnostics de capteur(s) de NOx (360, 460) d'un véhicule (200), dans lequel le véhicule comprend un ou plusieurs moteurs électriques (382, 482) configurés pour assurer la propulsion, un moteur à combustion interne (310, 410) - MCI - configuré pour fournir de l'énergie via un générateur électrique permettant d'entraîner directement le ou les moteurs électriques, et une ou plusieurs autres sources d'énergie (320, 420, 440) configurées pour alimenter et entraîner le ou les moteurs électriques, le système informatique comprenant un circuit de traitement configuré pour, pendant que le véhicule est en mouvement et que le ou les moteurs électriques sont utilisés pour la propulsion sans être entraînés par le MCI :
contrôler le MCI pour qu'il fonctionne selon un mode de fonctionnement prédéfini, dans lequel le mode de fonctionnement prédéfini présente une réponse non nulle, attendue, prédéfinie de manière correspondante du ou des capteurs de NOx (500) ;
contrôler le ou les capteurs de NOx pour effectuer des mesures associées au mode de fonctionnement prédéfini du MCI ; et
acquérir des résultats de mesure correspondants du ou des capteurs de NOx pour les comparer à la réponse prédéfinie, attendue, du ou des capteurs de NOx.

2. Procédé mis en œuvre par ordinateur (100) permettant d'effectuer des diagnostics de capteur(s) de NOx (360, 460) d'un véhicule (200), dans lequel le véhicule comprend un ou plusieurs moteurs électriques (382, 482) configurés pour assurer la propulsion, un moteur à combustion interne (310, 410) - MCI - configuré pour fournir de l'énergie via un générateur électrique permettant d'entraîner directement le ou les moteurs électriques, et une ou plusieurs autres sources d'énergie (320, 420, 440) configurées pour alimenter et entraîner le ou les moteurs électriques, le procédé comprenant, pendant que le véhicule est en mouvement et que le ou les moteurs électriques sont utilisés pour la propulsion sans être entraînés par le MCI (120) :
le contrôle (130), par le circuit de traitement d'un système informatique (290, 350, 456, 600, 720, 810), du MCI pour qu'il fonctionne selon un mode de fonctionnement prédéfini, dans lequel le mode de fonctionnement prédéfini présente une réponse non nulle, attendue, prédéfinie de manière correspondante du ou des capteurs de NOx (500) ;
le contrôle (140), par le circuit de traitement, du ou des capteurs de NOx pour effectuer des mesures associées au mode de fonctionnement prédéfini du MCI ; et
l'acquisition (150), par le circuit de traitement, de résultats de mesure correspondants du ou des capteurs de NOx pour comparaison (160) à la réponse prédéfinie, attendue, du ou des capteurs de NOx.

3. Procédé selon la revendication 2, dans lequel le mode opérationnel prédéfini est défini par un point de fonctionnement de moteur à vitesse constante et/ou dans lequel la réponse prédéfinie, attendue, du ou des capteurs de NOx est définie par un ou plusieurs des éléments suivants : une amplitude de crête (501), une durée (520), une forme d'impulsion et une émission totale.

4. Procédé selon l'une quelconque des revendications 2 et 3, dans lequel le contrôle du MCI pour qu'il fonctionne selon le mode de fonctionnement prédéfini comprend le fait de provoquer (132), par le circuit de traitement, une opération d'allumage unique du MCI.

5. Procédé selon l'une quelconque des revendications 2 à 4, dans lequel le contrôle du MCI pour qu'il fonctionne selon le mode de fonctionnement prédéfini comprend le fait de provoquer (134), par le circuit de traitement, un niveau d'injection de carburant spécifique correspondant.

6. Procédé selon l'une quelconque des revendications 2 à 5, dans lequel le contrôle du MCI pour qu'il fonctionne selon le mode de fonctionnement prédéfini comprend le fait de provoquer (136), par le circuit de traitement, l'application d'un couple correspondant à un vilebrequin du MCl.

7. Procédé selon la revendication 6, dans lequel la provocation de l'application du couple au vilebrequin du MCI comprend le contrôle, par le circuit de traitement, du générateur électrique du véhicule pour qu'il fonctionne en sens inverse afin de générer le couple.

8. Procédé selon l'une quelconque des revendications 2 à 7, dans lequel le contrôle du MCI pour qu'il fonctionne selon le mode de fonctionnement prédéfini comprend le fait d'amener (138), par le circuit de traitement, le MCI à fonctionner à un régime moteur correspondant.

9. Procédé selon l'une quelconque des revendications 2 à 8, comprenant en outre l'étalonnage (170), par le circuit de traitement, du ou des capteurs de NOx sur la base de la comparaison des résultats de mesure à la réponse prédéfinie, attendue, du ou des capteurs de NOx.

10. Procédé selon la revendication 9, comprenant en outre l'émission (190), par le circuit de traitement, d'une alerte de dysfonctionnement du ou des capteurs de NOx en réponse à l'échec de l'étalonnage.

11. Procédé selon l'une quelconque des revendications 2 à 10, comprenant en outre le déclenchement (110), par le circuit de traitement, de l'application du mode de fonctionnement prédéfini, les moteurs électriques n'étant pas entraînés par le MCI, en réponse à un ou plusieurs des éléments suivants :
un intervalle de temps spécifique s'étant écoulé depuis les mesures précédemment effectuées associées au mode de fonctionnement prédéfini du MCI ; et
une indication de dysfonctionnement du ou des capteurs de NOx.

12. Procédé selon l'une quelconque des revendications 2 à 11, comprenant en outre, avant le contrôle du ou des capteurs de NOx pour effectuer les mesures, le fait d'amener (125), par le circuit de traitement, le ou les capteurs de NOx à être portés à une température spécifiée.

13. Procédé selon la revendication 12, dans lequel le fait d'amener le ou les capteurs de NOx à être portés à la température spécifiée comprend, avant le contrôle du MCI pour qu'il fonctionne selon le mode de fonctionnement prédéfini, le contrôle, par le circuit de traitement, du MCI pour qu'il préchauffe le ou les capteurs de NOx.

14. Véhicule (200) comprenant un ou des capteurs de NOx (360, 460), un ou plusieurs moteurs électriques (382, 482) pour la propulsion, un moteur à combustion interne (310, 410) - MCI - configuré pour fournir l'énergie nécessaire à l'entraînement du ou des moteurs électriques, une ou plusieurs autres sources d'énergie (320, 420, 440) pour l'entraînement du ou des moteurs électriques, et le système informatique (290, 350, 456, 600, 720, 810) selon la revendication 1.

15. Produit de programme informatique (700) comprenant un code de programme pour réaliser, lorsqu'il est exécuté par le circuit de traitement, le procédé selon l'une quelconque des revendications 2 à 13.

16. Support de stockage non transitoire lisible par ordinateur (700) comprenant des instructions qui, lorsqu'elles sont exécutées par le circuit de traitement, amènent le circuit de traitement à réaliser le procédé selon l'une quelconque des revendications 2 à 13.
